# EUROPÄISCHE PATENTSCHRIFT

(11) **EP 0 630 320 B1**
(45) Veröffentlichungstag und Bekanntmachung des Hinweises auf die Patenterteilung: **12.04.2000**
(21) Anmeldenummer: 94904644.5
(22) Anmeldetag: 08.01.1994
(51) Int. Cl.: B32B 7/14

(54) **KLEBSTOFF ZUR FLÄCHIGEN, INSBESONDERE PUNKTFÖRMIGEN VERBINDUNG VON ZWEI MATERIALSCHICHTEN**
ADHESIVE FOR BONDING TOGETHER THE SURFACES OF TWO LAYERS OF MATERIAL, IN PARTICULAR BY BONDING TOGETHER POINTS ON THE SURFACES
ADHESIF PERMETTANT D'ASSEMBLER LES SURFACES DE DEUX COUCHES DE MATERIAUX, PLUS PARTICULIEREMENT PAR POINTS

(30) Priorität: 09.01.1993 DE 4300421
(43) Veröffentlichungstag der Anmeldung: 28.12.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9400037
(87) Internationale Veröffentlichungsnummer: WO9415782

(56) Entgegenhaltungen:
- EP-A- 0 091 262
- GB-A- 1 466 158
- US-A- 3 616 150
- US-A- 3 654 019
- US-A- 4 333 980
- US-A- 4 822 663

## Beschreibung

Die Erfindung betrifft einen Klebstoff zur flächigen, insbesondere punktförmigen Verbindung von zwei Materialschichten unter Temperatureinfluß gemäß dem Oberbegriff des Anspruches 1 und dessen Verwendung.

Aus der EP 0481 109 A1 ist ein Klebstoff zum Kleben von zwei Materialschichten bekannt. Dieser Klebstoff besteht aus einer Schmelzklebermasse zum rasterförmigen Beschichten eines Flächengebildes und einer auf dieser Schmelzklebermasse aufsitzenden Deckschicht, die in Pulverform vorliegt. Die Schmelzklebermasse wird rasterförmig auf das zu beschichtende Flächengebilde aufgebracht und das Schmelzkleberpulver wird darauf aufgestreut. Es handelt sich dabei um eine sogenannte Duobeschichtung bei der jeder Beschichtungspunkt aus zwei Schichten besteht. Nach dem Aufstreuen des Schmelzkleberpulvers wird der damit beschichtete Stoff in Vibration versetzt und anschließend das nicht an der Basisschicht, d.h. an der Schmelzklebermasse haftende Pulver entfernt. Das Verfahren ist aufwendig und die Qualität der Verbindung ist sehr von der Verfahrensführung abhängig.

In der DE-C 1 919 876 ist eine andere Verbindungsmöglichkeit zweier Material-schichten beschrieben. Eine netzförmig ausgebildete thermoplastische Kunststoffolie wird zwischen zwei zu verbindende Materialschichten gelegt und verbindet diese unter Temperatureinfluß miteinander, da sie selbst infolge Erwärmung klebefähig geworden ist. Dabei kann es sich um eine teilflächige oder ganzflächige Verbindung handeln.

Daneben ist aus der DE-B 1 560 777 eine thermisch aktivierbare Kleberschicht bekannt, die aus einem silikonisierten Papier mit auf diesem gleichmäßig verteilten, flachgedrückten Kügelchen aus thermoplastischem Material besteht. Dabei handelt es sich um eine Kleberschicht, die vorzugsweise zum Kaschieren von textilen Gebilden verwendet wird.

Weiterhin ist aus der EP 0 091 262 A1 eine Konglomeratfolie aus unterschiedlichen, diskreten Thermoplastpartikeln bekannt, wobei die Partikel in ihrer Peripherie verbunden vorliegen.

Aufgabe der vorliegenden Erfindung ist es, einen Klebstoff zur flächigen Verbindung von zwei Materialschichten anzugeben, welcher einfach in der Anwendung und genau dosierbar ist und außerdem eine ganz-, teilflächige oder punktförmige Verbindung der Schichten miteinander erlaubt.

Diese Aufgabe ist durch die im Hauptanspruch 1 angegebenen Merkmale gelöst. Die Unteransprüche stellen vorteilhafte Weiterbildungen dar.

Erfindungsgemäß besteht ein derartiger Klebstoff aus thermoplastischen Kunststoffolienstücken, welche in einer gewünschten Anordnung (Menge, Größe, Dicke, Form usw.) zwischen den zu verbindenden Schichten verteilbar sind. Diese Folienstücke können entweder direkt auf die Oberfläche einer der zu verbindenden Schichten aufgebracht werden und dann mit der zweiten der zu verbindenden Materialschichten unter erhöhter Temperatur und Druck mit dieser verbunden werden. Die auf der Kontaktfläche einer zu verbindenden Materialschicht abgelegten Kunststoffolienstücke werden vorzugsweise einer erhöhten Temperatur ausgesetzt, wodurch sie sich mit der Oberfläche dieser Materialschicht, auf der sie sich befinden, verbinden. Unter Temperatureinfluß verändern die Folienstücke ihre Form, sie schrumpfen; bei kleinen Abmessungen der verwendeten Folienstücke schrumpfen sie so, daß sie punktförmige Klebestellen bilden. Die Folienstücke sind in einer beliebigen Anordnung über die Kontaktflächen der Materialschichten verteilbar. Sie können dabei z.B. die ganze Kontaktfläche der Materialschicht bedecken oder nur einen Teil davon, wodurch die Verbindung der Materialschichten voll -oder teilflächig erfolgt. Die Klebestellen können auch in einer beliebigen z.B. rasterförmigen Anordnung auf der Fläche der Materialschichten angeordnet sein, wodurch eine punktförmige Verbindung nach einem bestimmten Muster realisierbar ist. Dies ist z.B. gegenüber "normalen" Bindefolien ein großer Vorteil, bei denen die Verbindung immer vollflächig und einheitlich ist. Grundsätzlich ist es auch möglich, durch die Verwendung des erfindungsgemäßen Klebstoffes eine vollflächige Materialschicht mit Schichten aus nicht vollflächigen, losen Materialien zu verbinden. Diese nicht vollflächige, lose Materialschicht kann also nur stellenweise, in einer gewünschten Anordnung, mit der anderen Schicht verbunden werden, wobei diese entsprechend mit dem erfindungsgemäßen Klebstoff versehen ist. Eine gleichmäßige und materialsparende Verteilung der Folienstücke kann rationell auf einer dafür eingerichteten Maschine aufgearbeitet werden.

Die Höhe der Temperatur, bei der die Verbindung der Materialschichten erfolgt, richtet sich nach dem verwendeten thermoplastischen Kunststoff. Sie soll vorteilhafterweise im Bereich der Schmelztemperatur des Kunststoffes liegen.

Durch die Verwendung von Folienstücken von verschiedenen Kunststoffen mit unterschiedlichen Erweichungs- / Schmelztemperaturen können die Materialschichten selektiv in mehreren Stufen miteinander verbunden werden. Z.B. können Folienstücke verwendet werden, durch die bei ca. 90 °C die Materialschichten aneinander angeheftet werden und dann durch weitere Folienstücke bei z.B. 160 °C die Materialschichten fest miteinander verbunden werden. Eine Kontaktfläche kann so mit Stücken aus verschiedenen Kunststoffen versehen werden, welche bei unterschiedlichen Temperaturen schmelzen, d.h. eine feste Verbindung erfolgt in Abhängigkeit von der verwendeten Temperatur an ausgewählten Stellen. Die als Klebstoff verwendbaren Kunststoffolienstücke können zwecks besserer Erkennbarkeit z.B. in Bezug auf die Höhe der Verbindungstemperatur unterschiedlich angefärbt sein. Bei einer vollflächigen Kleberbeschichtung ist auch eine teilflächige Reaktivierung möglich, indem der Klebstoff nur in bestimmten Flächenbereichen erwärmt wird. Eine spätere vollflächige Verbindung ist durch nachträgliches Erwärmen und vollflächiges Pressen oder Walzen möglich. Ebenso können doppelseitig beschichtete Materialschichten zunächst einseitig gebunden werden, z.B. als Dekorationsschicht und später dann reaktiviert auch mit einer anderen Fläche oder Raumform verbunden werden.

Der erfindungsgemäße Klebstoffwird als lose Kunststoffolienstückschüttung in Behälter abgefüllt, wobei die Kunststoffolienstücke jeweils unterschiedliche Größe aufweisen, die je nach der gewünschten Art der Verbindung und Qualität (kleine oder große Stücke) eingesetzt werden können.

Der erfindungsgemäße Kleber kann auch als eine bereits mit dem Kleber versehene Materialschicht geliefert werden. Dabei ist es besonders vorteilhaft, wenn z.B. Vlies oder Silikonpapier als Materialklebeschicht verwendet werden. Eine derartige, aus Silikonpapier bestehende Materialklebeschicht wird im Anwendungsfall auf eine andere Materialschicht aufgelegt, die beiden Schichten einer Druck- und Wärmeeinwirkung ausgesetzt, wobei die dem Silikonpapier angehefteten Klebefolienstücke auf die andere Materialschicht übertragen werden und das Silikonpapier anschließend abgezogen wird.

Der erfindungsgemäße Klebstoff ist lagerfähig und zeitbeständig.

Durch den Einsatz von Stücken definierter Größe und Anordnung ist es möglich, die Materialschichten fester oder lockerer miteinander zu verbinden.

Eine vorteilhafte Verwendung des erfindungsgemäßen Klebstoffes läßt zu, daß z.B. Isolierstoffe und Vliesstoffe bereits bei der Herstellung von Raumgebilden / räumlichen Bauteilen z.B. in einem Tiefziehprozeß oder Warmformgebungsprozeß mit diesem verbunden werden. Dabei wird der mit der vorteilhafterweise beidseitig mit dem erfindungsgemäßen Kleber versehene Träger zwischen die beiden zu verbindenden äußeren Schichten gelegt und mit diesen verbunden.

Es hat sich als besonders günstig erwiesen, die Folienstücke auf einem undichten Trägermaterial aufzubringen, das zwischen die beiden zu verbindenden Schichten eingebracht wird und mit den Kunststoffstücken darin verbleibt. Für diesen Zweck können auf einen solchen dünnen Stoff, wie Vliesstoff, Gelege oder feines Gewebe beidseitig Klebestücke aufgebracht werden. Die Größe der Maschen und der Folienstücke kann aufeinander abgestimmt werden.

Ein Verfahren zur Herstellung eines solchen Materials sieht vor, daß z.B. der in Form von Klebstoffolienstücken vorliegende Kleber zunächst erwärmt wird und in dem erwärmten Zustand auf die eine Kontaktfläche des Trägermaterials aufgetragen wird, wobei während der Druckeinwirkung der geschmolzene Klebstoff in die Maschen des Materials eingedrückt und durch diese durchgedrückt wird. Durch das Hindurchdrücken des Kunststoffmaterials kann der Träger neben der doppelseitigen Klebfähigkeit sogar eine Farb-, Präge- oder Formenstruktur erhalten.

Daneben kann der erfindungsgemäße Klebstoff sogar als Musterungselement eingesetzt werden, indem die Klebefolienstücke auf oder zwischen die zu verbindenden Flächen in z.B. verschiedenfarbigen Klebfolienstücken aufgetragen werden. Dabei kann es sich um Stanzlinge in Musterform oder harmonisch aufgeschüttete Folien handeln.

Vorzugsweise weisen die Kunststoffolienstücke eine Größe von 1 bis 5 mm in der Länge und Breite auf Sie können auch aus unterschiedlichen Materialien bestehen, z.B. Polyethylen, Polyamid, Polyester sowie Copolymeren dieser Kunststoffe und Mischungen davon. Zur besseren Unterscheidung können die unterschiedlichen Materialien auch unterschiedlich angefärbt sein.

Im Hinblick auf die ökonomische Wiedereinsetzung von Kunststoffmaterial ist es vorteilhaft, wenn der Klebstoff aus Stücken von Abfallfolien oder Restmaterial besteht.

Dadurch, daß unterschiedliche, beliebige Anordnungen des Klebstoffes zwischen den zu verbindenden Materialschichten durch punktförmige Verbindung realisierbar sind, ist ein z.B. luftdurchlässiges Gebilde einfach herstellbar.

Gemäß einer vorteilhaften Ausgestaltung können auch räumliche Gebilde flächig miteinander verbunden werden. Praktisch können Teile mit beliebiger räumlicher Ausgestaltung miteinander verklebt werden. Die räumlichen Teile können z.B. in einem gemeinsamen Formgebungsprozeß wie z.B. Tiefziehen oder Warmformen hergestellt werden, oder es können räumliche Teile nachträglich mit einer Materialklebeschicht versehen werden. Dabei können die Teile sowohl eine weiche als auch eine harte Struktur aufweisen.

Durch die Anwendung des erfindungsgemäßen Klebstoffes können Materialschichten aus unterschiedlichen Materialien miteinander verklebt werden, so z.B. Leder mit Textilstoff, Metallfolie mit Papier, Papier mit Papier, Pappe mit Metallfolie, Papier mit Holz usw. Die Verbindung von zwei Materialschichten kann auch einfach durch Aufbügeln erfolgen.

Erfindungsgemäß ist es vorteilhaft, daß die Klebeverbindung einfach durch eine erneute Temperaturanwendung gelöst werden kann, d.h. die zwei miteinander verbundenen Materialschichten können einfach auseinandergezogen und neu verbunden werden. Dabei wird keine der beiden Schichten zerstört oder beschädigt, auch nicht deren Oberfläche bzw. Kontaktfläche. Es kann jedoch auch vorgesehen sein, daß die verbundenen Materialschichten bis zu einer Stelle einfach lösbar sind und daß Stellen vorgesehen sind, an denen durch z.B. eine größere Menge des Klebstoffes oder eine höhere Schichtung desselben das Trennen der Schichten erschwert wird.

Eine Verwendung des erfindungsgemäßen Klebstoffs ist die Herstellung einer Materialklebeschicht, deren Kontaktfläche/-n mit angehefteten Stücken aus Kunststoffolien versehen ist / sind. Dadurch können auch nicht bindende Materialschichten, wie z.B. Papier oder Vliesstoff, oder auch Metallfolien klebefähig gemacht werden. Eine derartige Materialklebeschicht kann mit beliebigen anderen Materialschichten einseitig oder beidseitig verbunden werden, wobei sie im ersten Falle als Beschichtung dienen kann, im zweiten Falle als Klebeverbindung von zwei flächigen Materialschichten oder räumlichen Teilen.

Durch den erfindungsgemäßen Klebstoff können auch an eine Materialschicht einfach andere Gegenstände / Materialien wie z.B. Holz, Textil, Leder gebunden werden.

Das Verfahren zum Verkleben von zwei Materialschichten miteinander ist dadurch gekennzeichnet, daß zunächst auf die eine Materialschicht die Kunststoffolienstücke in der gewünschten Anordnung flächig (vollflächig, teilflächig, rasterförmig) abgelegt, diese Materialschicht und die Kunststoffolienstücke auf die Schmelztemperatur des Kunststoffes erwärmt werden (z.B. durch Infrarotstrahlung), wobei die Kunststoffolienstücke schmelzen, die zweite Materialschicht darauf abgelegt und unter Druck mit der ersten Schicht verbunden wird. In einer Abwandlung des Verfahrens ist vorgesehen, daß die zweite Schicht vor der Erwärmung auf die erste, mit Kunststoffstückchen versehene Schicht abgelegt wird und daß beide Materialschichten unter Druck erwärmt werden. Dabei verbinden die geschmolzenen Kunststoffstücke die beiden Materialschichten miteinander. Für manche Anwendungen ist es vorteilhaft, wenn die Verbindung der beiden Materialschichten durch Warmpressen mit Rillenmusterung z.B. unter starkem Druck erfolgt, wodurch neben guter Haftung eine interessante Oberflächenstruktur des Produktes erreicht wird.

Die Erfindung wird anhand eines Ausführungsbeispieles näher erläutert. Es zeigen:
- Fig. 1: Mögliche Formen der Kunststoffolienstücke vor der Erwärmung;
- Fig. 2: eine Materialschicht mit Klebepunkten;
- Fig. 3: zwei miteinander verbundene Materialschichten, und
- Fig. 4: eine Darstellung zweier miteinander zu verbindenden Materialschichten mittels einer doppelseitigen Materialklebeschicht.

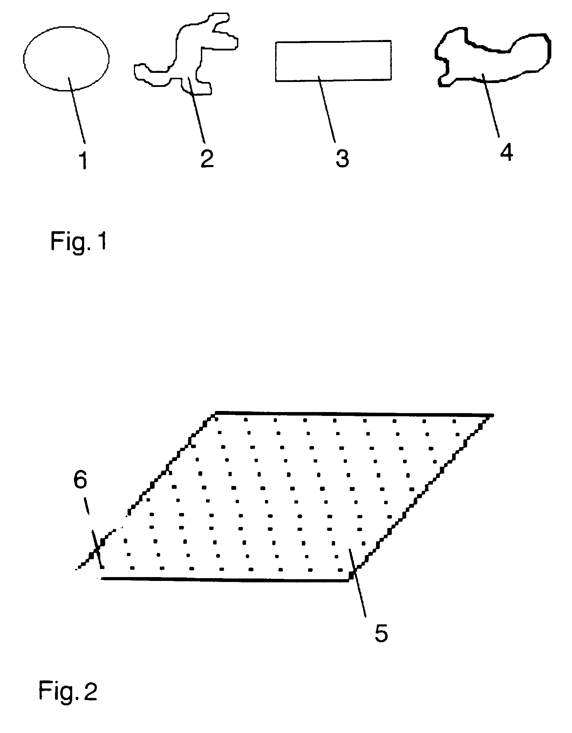

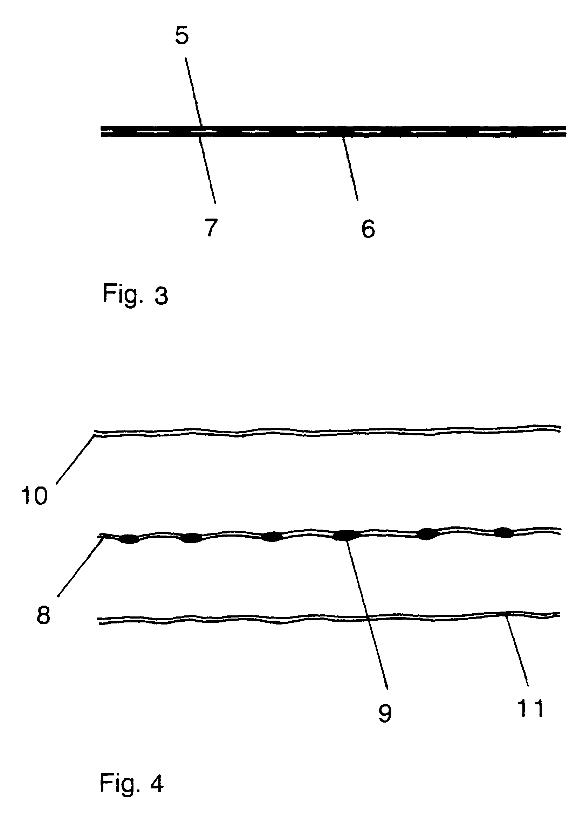

Wie aus Fig. 1 ersichtlich, können die Kunststoffolienstücke eine runde, unregelmäßige oder rechteckige Form 1, 2, 3 aufweisen. Sie können auch räumlich verformt sein (Stück 4). In der Darstellung nach Fig. 2 sind die Kunststoffolienstücke auf der Materialschicht 5 mit Abstand voneinander angeordnet. Nach Erwärmung auf die Schmelztemperatur des Kunststoffes bilden diese Kunststoffstücke (deren Form z .B. einer in der Fig. 1 dargestellten Form entspricht) Klebepunkte 6. In Fig. 3 sind zwei miteinander verklebte Materialschichten 5, 7 dargestellt, die Klebepunkte 6 sind durch Druckeinfluß flächig verformt. In Fig. 4 ist ein Vliesstoff 8 mit beidseitig angebrachtem Klebstoff 9 (durch die Maschen desselben durchgedrückte Folienstücke) dargestellt. In einem Warmwalzvorgang oder auf einer Bügelpresse wird diese Materialklebeschicht 8 mit einer Materialschicht 10 und einer zweiten Materialschicht 11 unter Wärme- und Druckeinwirkung verbunden.

Eine Materialschicht kann z.B. 50 - 100 g/m² Klebefolienstücke aufweisen, wenn die Stücke ca. eine Größe von einigen mm haben. Bei kleinen Folienstücken, die eine Größe von ca. 0,5 - 1 mm aufweisen, liegt die Dichte der aufgebrachten Folienstücke bei 10-50 g/m².

## Patentansprüche

1. Klebstoff zur flächigen, insbesondere punktförmigen Verbindung von zwei Materialschichten unter Temperatureinfluß, dadurch gekennzeichnet, daß der Klebstoff durch auf die Kontaktfläche mindestens einer Materialschicht (5, 7) aufbringbare thermoplastische Kunststoffolienstücke (1, 2, 3, 4) unterschiedlicher Größe und Dicke gebildet ist, wobei die Kunststoffolienstücke (1, 2, 3, 4) eine Größe zwischen 0,5 und 15 mm in Breite und Länge aufweisen.

2. Klebstoff nach Anspruch 1, dadurch gekennzeichnet, daß die Kunststoffolienstücke (1, 2, 3, 4) aus unterschiedlichen Materialien bestehen.

3. Klebstoff nach Anspruch 1 oder 2, dadurch gekennzeichnet, daß die Kunststoffolienstücke (1, 2, 3, 4) eine Größe zwischen 1 und 5 mm aufweisen.

4. Klebstoff nach einem der vorangegangenen Ansprüche, dadurch gekennzeichnet, daß die Kunststoffolienstücke (1, 2, 3, 4) aus Abfallfolien oder Restmaterial stammen.

5. Klebstoff nach einem der vorangegangenen Ansprüche, dadurch gekennzeichnet, daß die Klebverbindung durch Temperatureinfluß lösbar ist.

6. Verwendung des Klebstoffs nach einem der vorangegangenen Ansprüche zum Verbinden von zwei Materialschichten, dadurch gekennzeichnet, daß Stücke aus Kunststoffolie auf einer Materialschicht (5, 7) in beliebiger flächiger Anordnung abgelegt und unter Druck- und Temperatureinfluß mit den beiden Materialschichten (5, 7) verbunden werden.

7. Verwendung nach Anspruch 6, dadurch gekennzeichnet, daß die Verbindung durch Warmpressen erfolgt.

8. Verwendung nach einem der Ansprüche 6 oder 7, dadurch gekennzeichnet, daß die Verbindung der Materialschichten (5, 7) über die gesamte Kontaktfläche vollflächig oder teilflächig ist.

9. Verwendung nach einem der Ansprüche 6 bis 8, dadurch gekennzeichnet, daß die Verbindung punktförmig ist.

10. Verwendung nach einem der Ansprüche 6 bis 9, dadurch gekennzeichnet, daß die zu verbindenden Materialschichten Teile von räumlichen Bauteilen sind.

11. Verwendung nach einem der Ansprüche 6 bis 10, dadurch gekennzeichnet, daß die räumlichen Bauteile in einem raumformgebenden Prozeß, z.B. einem Tiefziehprozeß oder Warmformprozeß miteinander verbunden werden.

12. Verwendung des Klebstoffes nach einem der Ansprüche 1 bis 5 zur Herstellung einer beidseitigen Materialklebeschicht, bei der auf der einen Seite eines undichten Trägermaterials (8) Kunststoffolienstücke (9) angeordnet werden und unter Druck- und Temperatureinfluß mit diesem so verbunden werden, daß die Kunststoffolienstücke (9) durch die Maschen des undichten Trägers (8) durchgedrückt werden.

13. Verwendung nach Anspruch 12, dadurch gekennzeichnet, daß das Trägermaterial (8) Vliesstoff ist.

14. Verwendung des Klebstoffes nach einem der Ansprüche 1 bis 5 zur Herstellung einer Materialklebeschicht, bei der auf einem Silikonpapier Kunststoffolienstücke angeordnet und durch Wärmeeinwirkung mit diesem verbunden werden.

15. Verwendung der Materialklebeschicht nach Anspruch 12 zur flächigen oder räumlichen Verbindung von zwei Materialschichten (10, 11).

16. Verwendung des Klebstoffes nach einem der Ansprüche 1 bis 5, dadurch gekennzeichnet, daß der Klebstoff zur Verbindung von aus Papier, Leder, aus textilem Material wie Geweben, Metallfolie oder Pappe bestehenden Materialschichten (5, 7) miteinander oder mit anderen Materialschichten dient.

17. Verwendung des Klebstoffes nach einem der Ansprüche 1 bis 5 zur Herstellung einer Materialklebeschicht (5), die mindestens einseitig eine Kontaktfläche aufweist, der durch Temperatureinfluß Kunststoffolienstücke (6) angeheftet sind.

18. Verwendung nach Anspruch 17, dadurch gekennzeichnet, daß Folienstücke (6) aus unterschiedlichen Materialien nebeneinander angeordnet sind.

19. Verwendung nach Anspruch 18, dadurch gekennzeichnet, daß die Kunststoffolienstücke stellenweise mit einem deren Klebevermögen mindernden Material beschichtet sind.

## Claims

1. Adhesive for connecting two layers of material over an area, in particular at points, under the action of heat, characterised in that the adhesive is formed by pieces of thermoplastic plastics film (1,2,3,4) of different sizes and thickness capable of being applied to the contact surface of at least one layer of material (5,7), the pieces of plastics film (1,2,3,4) having a size between 0,5 and 15 mm in breadth and length.

2. Adhesive according to claim 1, characterised in that the pieces of plastics film (1,2,3,4) comprise different materials.

3. Adhesive according to claim 1 or 2, characterised in that the pieces of plastic film (1,2,3,4) have a size between 1 and 5 mm.

4. Adhesive according to one of the foregoing claims, characterised in that the pieces of plastic film (1,2,3,4) originate from scrap film or waste material.

5. Adhesive according to one of the foregoing claims, characterised in that the adhesive connection is releasable by the action of heat.

6. The use of the adhesive according to one of the foregoing claims, for connecting together two layers of material, characterised in that pieces of plastics film are deposited on a layer of material (5,7) in any desired spatial arrangement and bonded to the two layers of material (5,7) under the action of pressure and heat.

7. The use according to claim 6, characterised in that the bonding is achieved by hot-pressing.

8. The use according to one of claims 6 or 7 characterised in that the bonding together of the layers of material (5,7) takes place over the entire contact area either over the full area or partial area.

9. The use according to one of claims 6 to 8, characterised in that the bonding is point by point.

10. The use according to one of claims 6 to 9, characterised in that the layers of material to be bonded together are parts of three-dimensional bodies.

11. The use according to one of claims 6 to 10 characterised in that the three-dimensional bodies are bonded together in a process resulting in shaped bodies, e.g. a deep-drawing process or a heat-forming process.

12. The use of the adhesive according to one of claims 1 to 5 for the production of a double-sided material adhesive coating, in which pieces of plastics film (9) are arranged on one side of a permeable carrier material (8) and are bonded to it under the action of pressure and heat in such a way that the pieces of plastics film (9) are forced through the meshes of the permeable carrier (8).

13. The use according to claim 12, characterised in that the carrier material (8) is a fleece material.

14. The use of the adhesive according to one of claims 1 to 5 for producing a material adhesive coating in which pieces of plastic film are arranged on a silicone paper and bonded to it by the action of heat.

15. The use of the material adhesive coating according to claim 12 for the bonding together of two layers of material (10,11) either over an area or three-dimensionally.

16. The use of the adhesive according to one of claims 1 to 5, characterised in that the adhesive serves for bonding together, or to other layers of material, layers of material (5,7) comprising paper, leather, textile material such as fabrics, metal films or cardboard.

17. The use of the adhesive according to one of claims 1 to 5 for producing a material adhesive coating (5) which has at least on one side a contact face to which pieces of plastics film (6) are stuck by the action of heat.

18. The use according to claim 17, characterised in that pieces of film (6) of different materials are arranged side by side.

19. The use according to claim 18, characterised in that the pieces of plastics film are coated at points with a material which reduces the adhesive capacity.

## Revendications

1. Adhésif permettant d'assembler les surfaces de deux couches de matériaux, plus particulièrement par points, sous l'effet de la température, caractérisé par le fait que l'adhésif est formé de morceaux de films thermoplastiques (1, 2, 3, 4) de grandeur et d'épaisseur différentes pouvant être placés sur la surface de contact d'au moins une couche de matériaux (5, 7), les morceaux de films thermoplastiques (1, 2, 3, 4) présentant une grandeur comprise entre 0,5 et 15 mm en largeur et en longueur.

2. Adhésif suivant la revendication 1, caractérisé par le fait que les morceaux de films plastiques (1, 2, 3, 4) sont en des matériaux différents.

3. Adhésif suivant la revendication 1 ou 2, caractérisé par le fait que les morceaux de films thermoplastiques (1, 2, 3, 4) présentent une grandeur comprise entre 1 et 5 mm.

4. Adhésif suivant l'une des revendications précédentes, caractérisé par le fait que les morceaux de films thermoplastiques (1, 2, 3, 4) proviennent de déchets de films ou de restes de matériaux.

5. Adhésif suivant l'une des revendications précédentes, caractérisé par le fait que l'assemblage par collage peut être défait sous l'effet de la température.

6. Utilisation de l'adhésif suivant l'une des revendications précédentes pour l'assemblage de deux couches de matériaux, caractérisée par le fait que des morceaux de films plastiques sont placés sur une couche de matériaux (5, 7) selon une disposition au choix sur la surface et assemblés avec les deux couches de matériaux (5, 7) sous l'effet de la pression et de la température.

7. Utilisation suivant la revendication 6, caractérisée par le fait que l'assemblage est réalisé par pressage à chaud.

8. Utilisation suivant l'une des revendications 6 ou 7, caractérisée par le fait que l'assemblage des couches de matériaux (5, 7) est réalisé, sur toute la surface de contact, sur toute ou sur une partie de la surface.

9. Utilisation suivant l'une des revendications 6 à 8, caractérisée par le fait que l'assemblage est réalisé par points.

10. Utilisation suivant l'une des revendications 6 à 9, caractérisée par le fait que les couches de matériaux à assembler sont des parties d'éléments spatiaux.

11. Utilisation suivant l'une des revendications 6 à 10, caractérisée par le fait que les éléments spatiaux sont assemblés l'un à l'autre au cours d'une opération de façonnage spatial, par exemple une opération d'emboutissage ou une opération de façonnage à chaud.

12. Utilisation de l'adhésif suivant l'une des revendications 1 à 5 pour la réalisation d'une couche de matériaux adhésive double face, dans laquelle des morceaux de films plastiques (9) sont disposés sur une face d'un matériau support non-étanche (8) et assemblés avec ce dernier, sous l'effet de la pression et de la température, de sorte que les morceaux de films plastiques (9) sont enfoncés dans les mailles du support non-étanche (8).

13. Utilisation suivant la revendication 12, caractérisée par le fait que le matériau support (8) est un voile.

14. Utilisation de l'adhésif suivant l'une des revendications 1 à 5 pour la réalisation d'une couche de matériaux adhésive, dans laquelle des morceaux de films plastiques sont disposés sur un papier siliconé et assemblés avec ce dernier sous l'effet de la chaleur.

15. Utilisation de la couche de matériaux adhésive suivant la revendication 12 pour l'assemblage par les surfaces ou spatiale de deux couches de matériaux (10, 11).

16. Utilisation de l'adhésif suivant l'une des revendications 1 à 5, caractérisée par le fait que l'adhésif sert à l'assemblage de couches de matériaux (5, 7) en papier, cuir, matériau textile tel que tissus, film métallique ou carton l'une avec l'autre ou avec d'autres couches de matériaux.

17. Utilisation de l'adhésif suivant l'une des revendications 1 à 5 pour la réalisation d'une couche de matériaux adhésive (5) présentant, au moins d'un côté, une surface de contact à laquelle sont adhérés, sous l'effet de la température, des morceaux de films plastiques (6).

18. Utilisation suivant la revendication 17, caractérisée par le fait que des morceaux de films (6) de matières différentes sont disposés l'un à côté de l'autre.

19. Utilisation suivant la revendication 18, caractérisée par le fait que les morceaux de films plastiques sont revêtus par endroits d'un matériau réduisant leur pouvoir adhésif.
